# EUROPÄISCHE PATENTSCHRIFT

(11) **EP 0 471 101 B1**
(45) Veröffentlichungstag und Bekanntmachung des Hinweises auf die Patenterteilung: **12.03.1997**
(21) Anmeldenummer: 90115593.7
(22) Anmeldetag: 14.08.1990
(51) Int. Cl.: G11B 5/54

(54) **Verfahren zum Positionieren eines Magnetkopfes gegenüber dem Speichermedium eines Magnetschichtspeichers**
Method for positioning a magnetic head on a magnetic memory surface
Procédé pour le positionnement d'une tête magnétique sur la surface d'une mémoire magnétique

(43) Veröffentlichungstag der Anmeldung: 19.02.1992
(73) Patentinhaber: TANDBERG DATA A/S, 0808 Oslo 8 (NO)
(72) Erfinder: Solhjell, Erik, N-00855 Oslo 8 (NO)
(74) Vertreter: Goddar, Heinz J., Dr.

(56) Entgegenhaltungen:
- EP-A- 0 190 555
- DE-A- 3 117 911
- DE-A- 3 347 632
- IBM TECHNICAL DISCLOSURE BULLETIN. vol. 28, no. 11, April 1986, NEW YORK US Seiten 5139 - 5142; "alignement disk and method"

## Beschreibung

Die Erfindung bezieht sich auf ein Verfahren zum Positionieren eines Magnetkopfes auf verschiedene Spuren eines Speichermediums eines Magnetschichtspeichers.

Bei der magnetischen Aufzeichnung und Wiedergabe sowohl bei Magnetplatten- als auch Magnetbandspeichern ist es üblich, ein Magnetkopfsystem zu verwenden, das auf die verschiedenen Spuren des platten- bzw. bandförmigen Speichermediums einstellbar ist. Damit kann man mit einem relativ einfachen magnetischen Schreib/ Lesekopf auf eine Vielzahl von Spuren auf dem Aufzeichnungsmedium zugreifen. Der Schreib/Lesekopf bei Magnetplattenspeichern besteht häufig aus einem einzigen Kopfsystem, das mit Hilfe eines Linear- oder Drehpositionierers auf jeweils eine der vielen Informationsspuren der zugeordneten Speicherplatte positionierbar ist.

Bei Magnetbandspeichern dagegen kennt man eine größere Vielzahl von Ausgestaltungen der Magnetkopfsysteme. Diese reicht von einem einfachen Magnetkopf mit nur einem Spalt bis zu komplexen Magnetkopfsystemen mit einer Mehrzahl von parallelen Aufzeichnungskanälen, d. h. Mehrspurköpfen. Weiterhin sind bei Magnetbandgeräten verschiedene Betriebsarten üblich. So ist es allgemein bekannt, soeben aufgezeichnete Information unmittelbar danach wieder zu lesen, um gegebenenfalls Schreibfehler sofort korrigieren zu können. Für diesen Fall benötigt man einen Schreibkopf und einen in Bandtransportrichtung dahinter angeordneten Lesekopf, da die Funktionen "Schreiben" und "Lesen" gleichzeitig ablaufen müssen. Es ist auch bekannt, die Funktionen "Schreiben" und/oder auch "Lesen" bei beiden Transportrichtungen des Magnetbandes durchzuführen. Ohne daß diese Aufzählung notwendigerweise vollständig ist, ergibt sich daraus, daß bei Magnetbandspeichern je nach Anwendungsfall und Ausgestaltung eine Vielzahl unterschiedlicher Magnetkopfsysteme eingesetzt wird.

Dabei ist allen diesen möglichen Ausgestaltungen von Magnetschichtspeichern eine Reihe von grundsätzlichen Randbedingungen gemeinsam. Die Entwicklungstendenz geht bei allen Magnetschichtspeichern immer noch in Richtung der Erhöhung der Speicherkapazität bei gleichzeitig verbesserter Betriebssicherheit, d. h. auch verringerter Fehlerrate beim Schreiben und/oder Lesen. In Spurrichtung läßt sich die Speicherkapazität erweitern durch eine Erhöhung der Flußwechsel pro Längeneinheit. Die erhöhte Bitdichte führt allerdings zu einer erniedrigten Lesesignalamplitude, zu Signalinterferenzen aufgrund von Spitzenwertverschiebungen und damit zu einem höheren Risiko, daß ein Aufzeichnungsimpuls unterdrückt wird. Die Bitdichte ist daher auch mit verbesserten Speichermedien und Speicherköpfen nicht beliebig heraufsetzbar. Die andere Möglichkeit, die Speicherkapazität zu erweitern, besteht darin, die Spurdichte zu erhöhen. Dabei gestaltet es sich allerdings immer schwieriger, die immer schmaler werdenden Informationsspuren zu lesen bzw. allgemeiner den Magnetkopf genau auf einer ausgewählten Informationsspur zu positionieren.

Bei diesem Trend wächst die Bedeutung von Toleranzen im mechanischen Aufbau eines Magnetkopfsystemes selbst sowie der Montage an einem Magnetkopfträger, aber auch der gesamten Positioniereinrichtung, die das Magnetkopfsystem bezüglich der Informationsspuren des Speichermediums positioniert. Wiederum gilt dies in gleicher Weise sowohl für unterschiedliche Magnetkopfsysteme als auch für unterschiedliche Positioniereinrichtungen, wenn auch in jedem einzelnen Fall die konstruktiv mit angemessenem Aufwand erreichbaren Einzeltoleranzen unterschiedlich sein mögen.

Aus US-A-4,679,104 die der EP-A-0 190 555 entspricht ist es bereits bekannt, daß die Auswirkung dieser Toleranzen auch bei einzelnen Stücken von den Magnetkopfsystemen desselben Typs durchaus unterschiedlich sein können und es daher notwendig ist, diese Auswirkungen individuell zu erfassen, um präzise positionieren zu können. Aus der genannten Druckschrift ist ein Verfahren und eine Anordnung zum Positionieren eines Magnetkopfes auf verschiedene Spuren eines Magnetbandes bekannt, bei dem man durch Vergleichen jeweiliger Ist-Positionswerte des Magnetkopfes mit Soll-Positionswerten, die den verschiedenen Spuren des Magnetbandes zugeordnet sind, Steuersignale für eine motorbetriebene Verschiebung der Positioniereinheit erzeugt. Erzeugt werden diese Steuersignale für eine Motorsteuerung der Positioniereinrichtung im normalen Betrieb des Magnetbandspeichers unter Verwendung von gespeicherten Positionswerten. Diese Positionswerte werden während eines Meßvorganges bestimmt, bei dem das Magnetkopfsystem aus einer definierten Bezugsposition heraus auf die Mitte mindestens einer Spur positioniert wird und diese Position einem definierten gemessenen Positionswert zugeordnet wird. Nach der bekannten technischen Lehre können diese Positionswerte aus Nominalwerten, die für eine Mehrzahl von Magnetbandgeräten gleichen Typs gelten und aus individuellen Korrekturwerten zusammengesetzt sein, die für jedes Magnetbandgerät einzeln ermittelt werden. Der Grundgedanke, der hinter dieser bekannten Lösung steht, beruht darauf, der Steuerung jedes einzelnen Magnetbandgerätes bestimmte, jeweils individuell gemessene Werte einzugeben, aufgrund deren sie in der Lage ist, individuelle Toleranzen im jeweiligen Magnetbandgerät bei jedem Positioniervorgang zu berücksichtigen, d. h. auszugleichen.

Dieses bekannte Verfahren genügt den Anforderungen bei heute handelsüblichen Magnetband-Kassettengeräten mit etwa bis zu 30 parallelen Informationsspuren auf dem Magnetband durchaus. Das Problem dabei ist aber, daß die damit gemessenen Korrekturwerte selbst noch relativ ungenau sind, weil die Messung zur Kalibrierung des einzelnen Laufwerkes selbst noch fehlerbehaftet ist. Dies ist kritisch bei Speichergeräten mit auswechselbarem Speichermedium, z.B. bei Magnetband-Kassettengeräten. Nach dem bekannten Verfahren werden dort zwar die individuellen Toleranzen der Positioniereinrichtung gegenüber einer solchen Einheit von Magnetband und Kassette in handelsüblicher Ausführung erfaßt, im normalen Betrieb können aber die so beschriebenen Kassetten in unterschiedlichen Laufwerken eingesetzt werden. Wenn man unter Beibehaltung des bekannten Kalibrierungsverfahrens bei solchen Geräten die Speicherkapazität weiter erhöhen möchte, müßte man trotz des angestrebten Toleranzausgleichs versuchen, mit einem aus Kostengründen nicht vertretbaren Aufwand dennoch diese Toleranzen niedrig zu halten, um volle Kompatibilität zu gewährleisten.

Der Erfindung liegt daher die Aufgabe zugrunde, das bekannte Verfahren zum Positionieren des Magnetkopfes gegenüber dem Speichermedium derart weiterzubilden, daß damit auch den weiter steigenden Anforderungen hinsichtlich eines Toleranzausgleiches genügt wird.

Die Aufgabe wird durch ein Verfahren nach Anspruch 1 gelöst. Diese Lösung geht von der Überlegung aus, daß heute eine Mehrzahl von Ausführungsformen für Positioniersysteme verfügbar ist, deren Auflösung vom Antrieb her gesehen bezüglich der erforderlichen Positionierweite sehr hoch ist. Damit könnte man bereits heute mit fertigungstechnisch vertretbarem Aufwand an sich sehr genau positionieren. Das Problem aber ist, daß die gesamte Struktur jeder der bekannten Positiniereinrichtungen relativ aufwendig ist. Dies gilt sowohl für induktiv angetriebene Schwingspulen bei Drehpositionierern als auch für Topfspulantriebe oder Schrittmotorantriebe bei Linearpositionierern. In jedem Fall besteht die Positioniereinrichtung aus einer Mehrzahl von jeweils toleranzbehafteten Einzelteilen, so daß sich bei der Montage Toleranzkettungen ergeben und sich die Möglichkeiten der hohen Auflösung des Antriebes deshalb nicht mehr voll nutzbar umsetzen lassen. Aus Kostengründen ist es unvertretbar, wegen der unvermeidbaren Toleranzkettungen immer höhere Anforderungen an die Einzeltoleranzen zu stellen. Dies gilt sowohl für den Magnetkopf selbst als auch die Positioniereinrichtung als solche und schließlich auch für die montierte Einheit.

Man sollte daher eine gewisse gekettete Toleranz als gegeben ansehen und nach weiteren Möglichkeiten suchen, solche Toleranzen im Laufwerk individuell abzugleichen. Unter solchen Voraussetzungen müssen die individuellen Toleranzketten beim Kalibrieren des einzelnen Laufwerkes ihrerseits aber besonders sorgfältig festgestellt werden. Ein wesentliches Merkmal des Verfahrens besteht darin, für diese Kalibrierung ein Referenznormal, d.h. ein Speichermedium einzusetzen, dessen Eigenschaften, insbesondere seine Abmessungen möglichst absolut genau bekannt sind. Mit noch vertretbarem Aufwand ist es auch mit bekannten Mitteln möglich, z.B. unter genau definierten Laborbedingungen, wie Umgebungstemperatur, Luftfeuchtigkeit, einem präzisen Abgleich der Elektronik eines Laufwerkes usw. auf einem ausgewählten Speichermedium Spurmuster aufzuzeichnen, deren Eigenschaften, insbesondere auch relative Positionen im Rahmen erzielbarer Meßgenauigkeit exakt bekannt sind.

Wenn man nun den Testlauf zur geräteindividuellen Kalibrierung eines Laufwerkes unter Verwendung eines derart hergestellten Referenzmediums durchführt, dann beruhen alle festgestellten Abweichungen der Absolutposition des Magnetkopfes von einer gerätetypischen, d.h. von der Konstruktion vorgegebenen Normalposition lediglich auf den Toleranzkettungen des individuellen Laufwerkes. Nur von diesen Toleranzen abhängige Korrekturwerte lassen sich so geräteindividuell ermitteln, damit kann innerhalb eines Gerätetyps auch bei einem auswechselbaren Speichermedium volle Kompatibilität zwischen individuellen Laufwerken erhalten werden.

Grundsätzlich ist damit als Richtung vorgegeben, eine bestimmte "Intelligenz" in das einzelne Laufwerk zu verlegen, die es ermöglicht, eigene Fehler in einem durch den Umfang der vorgesehenen Korrekturwerte vorgegebenen Rahmen selbst zu korrigieren. Der dafür im Laufwerk erforderliche Aufwand hält sich im Vergleich zu den erzielbaren Vorteilen in sehr engen Grenzen. Steuerungen für Positionierer müssen in jedem Fall in der Lage sein, Ist-Positionen des Magnetkopfes mit einer Soll-Position zu vergleichen, um einen Positioniervorgang durchführen zu können. Dazu sind bereits heute vielfach solche Steuerungen mit einem Mikroprozessor sowie entsprechenden Speichereinrichtungen ausgestattet. Der Mikroprozessor oder ein anderes, geeignet aufgebautes Steuerwerk muß daher lediglich so ausgerüstet sein, daß sich die gewünschten Korrekturwerte aus dem Verhältnis gemessener Nominalpositionen des Magnetkopfes zu den durch das Spurmuster des Referenzspeichermediums vorgegebenen Absolutpositionen ermitteln und nicht-flüchtig abspeichern lassen.

Diese Korrekturwerte stehen dann im normalen Betrieb zur Verfügung, um momentane Nominalpositionswerte mit dem jeweiligen zugehörigen Korrekturfaktur in korrigierte Positionswerte umzusetzen. Damit ist die Steuerung der Positioniereinrichtung jederzeit in der Lage, den Magnetkopf absolut genau zu positionieren. Dies erlaubt z.B. Informationsspuren auf dem Speichermedium sehr schmal zu halten, dabei gegebenenfals sogar auf unbeschriebene Bänder zwischen benachbarten Spuren zu verzichten, ohne daß deswegen eine exakte Spurzuordnung des Magnetkopfes verlorengeht.

Kritischer ist bei dieser Lösung die Herstellung des Referenzspeichermediums, insbesondere die Erzeugung des gewünschten Spurmusters. Dafür wird eine Einrichtung zur Durchführung des diskutierten Verfahrens verwendet, deren wesentlicher Bestandteil zunächst ein typenspezifisches Laufwerk mit der entsprechenden Positioniereinrichtung ist. Es ist empfehlenswert, dieses Laufwerk im Hinblick auf niedrige gekettete Toleranzen der Positioniereinrichtung auszuwählen. Man könnte sogar eine für ein solches Referenzgerät eigens und besonders sorgfältig hergestellte Positioniereinrichtung verwenden, was aber nicht unbedingt notwendig erscheint. Wesentlich ist ebenso der dafür verwendete typenspezifische Magnetkopf, ebenso im Hinblick auf seine individuellen Toleranzen ausgewählt oder aber eigens für diesen Einsatz gefertigt. Insoweit unterscheidet sich die Ausstattung des Referenzgerätes alles in allem nicht von einem typenspezifischen Laufwerk.

Darüber hinaus benötigt man aber mit dem Magnetkopf bzw. seinem Träger gekoppelte Einrichtungen, mit denen man als Bezugsposition vorzugsweise eine Bandkante des Referenzspeichermediums in bezug auf die nominale Lage des Magnetkopfes exakt bestimmen kann. Außerdem ist ein in an sich bekannter Weise z.B. als mechanischer oder optischer Detektor ausgestatteter Positionsdetektor vorzusehen, mit dem die jeweilige absolute Position des Magnetkopfes relativ zum Speichermedium feststellbar ist. Damit ist man dann in der Lage, unter definierten Bedingungen vorgegebene Spurmuster jederzeit exakt reproduzierbar herzustellen.

Weitere Vorteile sowie Weiterbildungen der Erfindung ergeben sich aus der nachfolgenden Beschreibung eines Ausführungsbeispieles anhand der Zeichnung. Dabei zeigt:
Figur 1 schematisch den Aufbau einer Positioniereinrichtung für ein Magnetbandgerät und die zugehörige Lese- bzw. Steuerungselektronik,
Figur 2 schematisch die Struktur eines bei einem Laufwerk nach Figur 1 verwendbaren Magnetkopfes,
Figur 3 einen Ausschnitt aus einem Magnetband, auf das Informationsspuren mit einem Magnetkopf nach Figur 2 aufgezeichnet sind,
Figur 4 den schematischen Aufbau einer Positioniereinrichtung zum Herstellen eines Referenzmagnetbandes und
Figur 5 ein Beispiel für ein Spurmuster, das auf einem Referenzmagnetband aufgezeichnet ist sowie verschiedene Positionen des Magnetkopfes relativ zu diesem Magnetband im Verlauf eines geräteindividuellen Kalibrierungsvorganges.

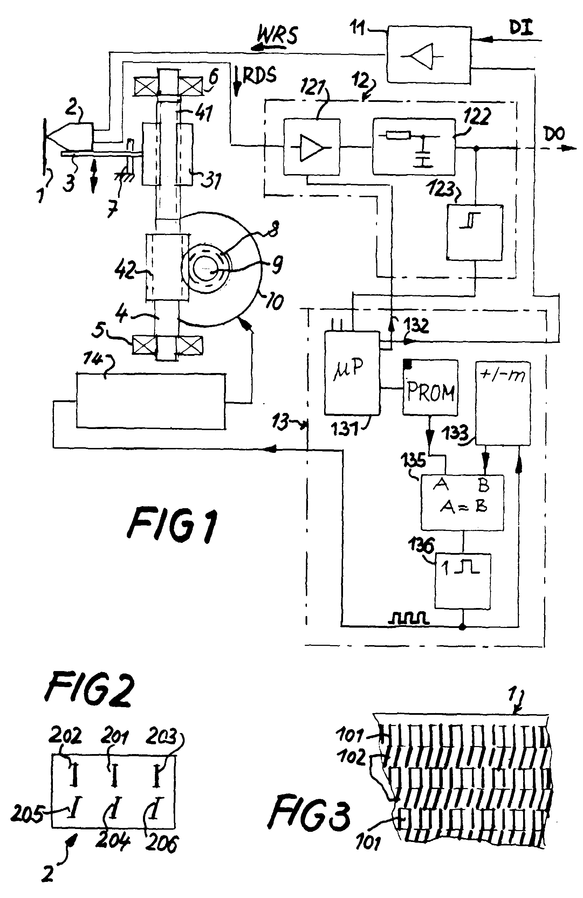

In Figur 1 sind schematisch Teile eines Laufwerkes für ein Magnetband-Kassettengerät dargestellt, soweit dies im gegebenen Zusammenhang zweckmäßig erscheint. Schematisch ist ein Magnetband 1 im Schnitt gezeigt, das von einem nicht dargestellten Magnetbandantrieb senkrecht zur Zeichenebene transportiert wird. Dem Magnetband 1 steht ein Magnetkopf 2 gegenüber, der als Schreib/Lesekopf ausgebildet ist. Die Struktur dieses Magnetkopfes 2 ist nicht auf eine bestimmte Ausführungsform festgelegt, vielmehr kann dafür im Grunde jede der bekannten Bauformen von Magnetköpfen für Magnetband-Kassettengeräte verwendet werden.

Im einfachsten Fall kann ein Magnetkopf lediglich einen einzigen Magnetspalt aufweisen, der dann sowohl Lese- als auch Schreibspalt ist. Bei aufwendigeren Ausführungsformen könnte der Magnetkopf aber auch mehrere Magnetspalte besitzen, womit sich die Möglichkeit ergibt, individuelle Lese-bzw. Schreibköpfe auszubilden. Auch hier sind unterschiedliche Anordnungen bekannt, die beispielsweise die Betriebsfunktionen "Lesen" und "Schreiben" mit individuellen Magnetkopfsystemen, gegebenenfalls in beiden Transportrichtungen des Magnetbandes ermöglichen. Auch sind Magnetköpfe bekannt, die unmittelbar während eines noch laufenden Aufzeichnungsvorganges durch einen Schreibkopf ein Kontrollesen eben aufgezeichneter Daten durch einen in Transportrichtung nachgeordneten Lesekopf gestatten. Während man heute für die Aufzeichnung digitaler Daten auf einem Magnetband-Kassettengerät üblicherweise Magnetköpfe verwendet, deren Schreib-bzw. Lesespalte exakt senkrecht zur Transportrichtung des Magnetbandes ausgerichtet sind, wäre es auch hier denkbar, einen Magnetkopf zu verwenden, dessen Magnetspalte unter vorgegebenen Azimuthwinkeln quer zur Transportrichtung des Magnetbandes angeordnet sind. Unterschiedliche Azimuthwinkel ermöglichen dann eine Erhöhung der Spurdichte auf dem Magnetband, ohne daß dabei Signalinterferenzen aus benachbarten Spuren hervorgerufen werden.

In Figur 2 ist schematisch ein Beispiel für die Struktur eines Magnetkopfes 2 dargestellt, das aus der Vielzahl der möglichen Bauformen für Magnetköpfe ausgewählt ist. Figur 2 zeigt die dem Magnetband 1 zugekehrte Oberfläche eines solchen Magnetkopfes 2, der zwei untereinander liegende, also quer zur Transportrichtung des Magnetbandes 1 angeordnete Magnetkopfsysteme aufweist. Diese Magnetkopfsysteme sind jeweils durch entsprechende Magnetspalte 201, 202, 203 bzw. 204, 205, 206 repräsentiert, wobei die Magnetspalte der beiden Magnetkopfsysteme jeweils unterschiedliche Azimuthwinkel aufweisen. Bei den im gewählten Beispiel aus jeweils drei Magnetspalten bestehenden Magnetkopfsystemen mögen die mittig liegenden Magnetspalte 201 bzw. 204 jeweils die Magnetspalte für zwei Schreibköpfe darstellen. Die links bzw. rechts davon liegenden Magnetspalte, z. B. 202 bzw. 203 sind dann Magnetspalte jeweils eines Lesekopfes.

Jedes Magnetkopfsystem dieser Anordnung ermöglicht während eines Aufzeichnungsvorganges unmittelbar ein Kontrolllesen der eben aufgezeichneten Information in beiden Transportrichtungen des Magnetbandes 1. Darüber hinaus ermöglicht diese zweikanalige Struktur des Magnetkopfes 2, d. h. die untereinander liegende Anordnung von zwei Magnetkopfsystemen, deren Magnetspalte unterschiedliche Azimuthwinkel aufweisen, eine Datenaufzeichnung auf dem Magnetband 1 ebenfalls mit den entsprechenden unterschiedlichen Azimuthwinkeln in nebeneinander liegenden Aufzeichnungsspuren des Magnetbandes 1.

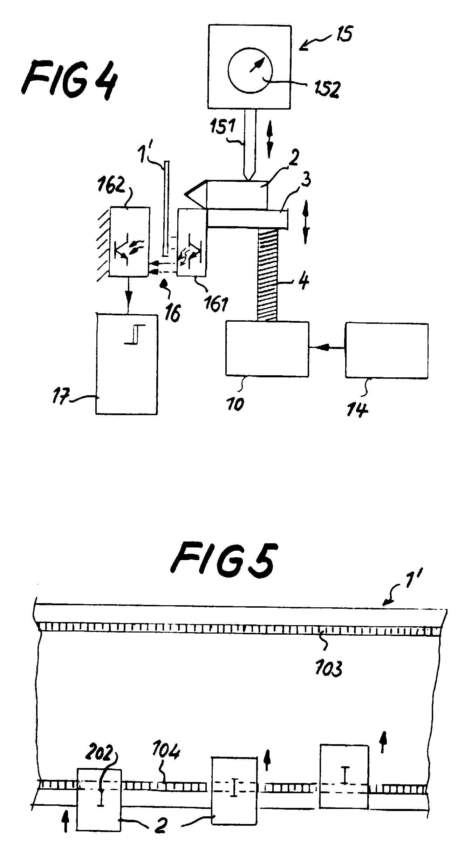

In Figur 3 ist schematisch auf einem Ausschnitt des Magnetbandes 1 ein auf diese Weise erzeugtes Magnetisierungsmuster schematisch dargestellt. Parallel zur Längsachse des Magnetbandes 1 liegen Aufzeichnungsspuren 101 bzw. 102 mit verschiedenem Spurtyp alternierend nebeneinander. Die Informationsspuren 101 des einen Spurtyps zeigen schematisch senkrecht zur Längsachse des Magnetbandes 1 ausgerichtete, als Striche dargestellte Magnetisierungswechsel. Diese Informationsspuren 101 sind mit dem Schreibkopf 201 des ersten Magnetkopfsystemes aufgezeichnet. Zwischen diesen Informationsspuren 101 des einen Spurtyps liegen die Informationsspuren 102 des anderen Spurtyps, bei dem die Magnetisierungswechsel durch den Schreibkopf 204 des zweiten Magnetkopfsystemes aufgezeichnet und demzufolge mit dem vorgegebenen Azimuthwinkel schräg zur Querachse des Magnetbandes 1 ausgerichtet sind. Es sei nochmals betont, daß ein derartiges Aufzeichnungsverfahren mit Hilfe der in Figur 2 dargestellten Magnetkopfstruktur lediglich eine von vielen Möglichkeiten für die digitale Datenaufzeichnung bei Magnetband-Kassettengeräten darstellt. Das anhand der Figuren 2 bzw. 3 dargestellte Beispiel wurde u.a. deshalb gewählt, weil es für die Zwecke der Aufzeichnung digitaler Daten auf einem Magnetband bereits relativ kompliziert ist und damit illustriert, daß im vorliegenden Fall auch an die Verwendung derartiger Magnetkopfstrukturen gedacht ist, wobei aber die noch zu erläuternde technische Lehre darauf nicht beschränkt ist.

Wie sich aus der vorstehenden Erläuterung zu Figur 3 ohne weiteres ergibt, muß der Magnetkopf 2 zum Aufzeichnen der verschiedenen Spuren 101 bzw. 102 quer zur Längsachse des Magnetbandes 1 positionierbar sein. Herkömmliche Magnetband-Kassettengeräte besitzen dazu eine Positioniereinrichtung. Lediglich als Beispiel sei in diesem Zusammenhang auf die aus US-A-4,679,104 bekannte Positioniereinrichtung verwiesen. In Figur 1 ist deshalb eine solche Positioniereinrichtung lediglich schematisch dargestellt.

Figur 1 zeigt, daß der Magnetkopf 2 auf einem Tragarm 3 festgelegt ist, der seinerseits, wie durch einen Doppelpfeil angedeutet, mit Hilfe einer Getriebeanordnung quer zur Längsachse des Magnetbandes 1 verschiebbar ist.

Diese Getriebeanordnung sieht eine achsenparallel zur Querachse des Magnetbandes 1 angeordnete Positionierspindel 4 vor, die an beiden Enden in Lagern 5 bzw. 6 drehbar gelagert ist. Die Positionierspindel 4 weist in dem Bereich unterhalb des oberen Spindellagers 6 ein Gewinde auf, das vorzugsweise als Schnekkengewinde 41 ausgebildet ist. Auf dieses Gewinde ist eine Gewindemuffe 31 aufgeschoben, an die der Tragarm 3 seitlich angelenkt ist. Schematisch ist ein Führungselement 7 für den Tragarm 3 angedeutet, das ein seitliches Verschwenken des Tragarmes 3 im Betriebszustand verhindert. Wenn man nun die Positionierspindel 4 in Drehbewegung versetzt, dann wandert die Gewindemuffe 31 zusammen mit dem Tragarm 3 wegen dieser Drehbegrenzung des Führungselementes 7 je nach Drehrichtung der Positionierspindel auf dieser nach oben bzw. unten, wobei sich die relative Lage des Magnetkopfes 2 gegenüber dem Magnetband 1 verändert.

Um diese Drehbewegung der Positionierspindel 4 zu erzeugen, ist auf dieser im unteren Teil ein Schneckenrad 42 mit Außengewinde festgelegt. In dieses greift eine Schnecke 8 ein, die auf einer Achse 9 eines Motors 10 angeordnet ist. Dieser Motor 10 kann als Gleichstrommotor ausgebildet sein, ist aber vorzugsweise ein Schrittmotor. Die rotatorische Schrittbewegung des Antriebsmotors 10 bewirkt mit Hilfe der beschriebenen Getriebeanordnung die Hub- bzw. Senkbewegung des Tragarmes 3 je nach dessen Drehrichtung. Die beschriebene Struktur der Positioniereinrichtung wurde für dieses Beispiel aus Gründen der Übersichtlichkeit gewählt. Sie ist damit keineswegs die einzige oder auch nur eine bevorzugte Ausführungsform für derartige Positioniereinrichtungen. Sie sollte nur verdeutlichen, daß Positioniereinrichtungen für Magnetköpfe bzw. Magnetkopfsysteme von Magnetband-Kassettengeräten wegen der notwendigen Umsetzung einer Drehbewegung eines Antriebselementes in eine lineare Hub- bzw. Senkbewegung mechanisch relativ aufwendig sind, daß dabei eine Mehrzahl von mechanischen Elementen zusammenwirkt, die alle toleranzbehaftet sind. Folglich sind alle derartigen Positioniereinrichtungen auch bei hohem Fertigungsaufwand und zweckmäßigem konstruktiven Aufbau nicht ohne weiteres ausreichend toleranzfrei herstellbar.

Weiterhin ist in Figur 1, soweit im vorliegenden Fall für zweckmäßig erachtet, schematisch die Elektronik des Laufwerkes für ein Magnetband-Kassettengerät dargestellt. Angedeutet ist eine Schreibelektronik in Form eines Schreibverstärkers 11, dem aufzuzeichnende Daten DI zugeführt werden und der diese als verstärkte Schreibsignale WRS dem Magnetkopf 2 zuführt. Der Datenaufzeichnungsvorgang sowie das Aufzeichnungsverfahren spielen im vorliegenden Fall lediglich eine untergeordnete Rolle, so daß es wohl nicht erforderlich erscheint, die Schreibelektronik in Figur 1 näher darzustellen und auch zu erläutern. Hierzu kann auf die entsprechenden Elektronikschaltungen bekannter Magnetband-Kassettengeräte verwiesen werden.

Bei einem Lesevorgang induzieren die Magnetisierungsmuster auf dem Magnetband 1 im Magnetkopf 2 analoge Lesesignale RDS, die einer Leseelektronik 12 des Magnetband-Kassettengerätes zugeführt werden. Auch derartige Leseelektroniken sind an sich bekannt, so daß hier vereinfacht lediglich ein Leseverstärker 121 angedeutet ist, der diese Lesesignale RDS empfänge. Der Ausgang dieses Leseverstärkers 121 ist mit einer Filteranordnung 122 verbunden, die die verstärkten Lesesignale umformt und begrenzt. Am Ausgang dieser Filteranordnung ist in Form einer als unterbrochene Linie dargestellten Signalleitung angedeutet, daß die Lesesignale RDS in der Leseelektronik 12 weiteraufbereitet und schließlich als digitalisierte Lesedaten DO abgegeben werden.

Im vorliegenden Fall ist lediglich weiter von Bedeutung, daß eine Einheit vorgesehen ist, die die von der Filteranordnung 122 abgegebenen Signale bewertet. Diese Bewertungseinheit könnte, wie dargestellt, ein Schmitt-Trigger, d. h. also ein Signalamplitudendetektor 123 sein. Es wäre ohne weiteres auch denkbar, diese Bewertungseinheit als Analog/Digital-Wandler aufzubauen. In dem der Einfachheit halber angenommenen Fall eines Amplitudendetektors gibt dieser an seinem Ausgang ein Signal mit einer positiven Flanke ab, sobald die Amplitude des von der Filteranordnung 122 abgegebenen Lesesignals einen vorgegebenen Schwellenwert überschreitet. Dieser Impulszustand wird solange gehalten, bis die Signalamplitude am Eingang des Amplitudendetektors 123 diesen Schwellenwert wieder unterschreitet. Damit sind die Ausgangssignale des Amplitudendetektors 123 Rechteckimpulse. Diese werden aus noch zu erläuternden Gründen einer Steuerelektronik 13 des Laufwerkes des Magnetband-Kassettengerätes zugeführt. Im normalen Betrieb dient diese Steuerelektronik dazu, den Magnetkopf 2 auf eine ausgewählte Spur des Magnetbandes 1 einzustellen. Auch derartige Steuerelektroniken von Laufwerken für Magnetband-Kassettengeräte sind bekannt und beispielsweise auch in der bereits oben genannten US-A-4,679,104 beschrieben. In Figur 1 ist daher eine derartige Steuerelektronik 13 lediglich vereinfacht und im Hinblick auf Einzelheiten des vorliegenden Anwendungsfalles ausgewählt dargestellt.

Als zentrale Steuereinrichtung ist ein Mikroprozessor 131 dargestellt, der die Betriebsfunktionen "Lesen" bzw. "Schreiben" überwacht und deshalb, wie schematisch angegeben, über Steuerleitungen 132 sowohl mit der Schreibelektronik 11 bzw. der Leseelektronik 12 verbunden ist. Der Mikroprozessor 131 gibt bei einem Spurwechsel des Magnetkopfes 2 die neue Soll-Position an. Die aktuelle Ist-Position des Magnetkopfes 2 ist fortlaufend in einem Speicher gespeichert, der im vorliegenden Ausführungsbeispiel als Vorwärts/Rückwärtszähler 132 ausgebildet ist.

Mit den einem Soll-Positionswert des Magnetkopfes 2 entsprechenden Ausgangssignalen des Mikroprozessors 131 wird ein Korrekturwertspeicher 134 adressiert, der vorzugsweise als programmierbarer Festwertspeicher ausgebildet ist. Dieser Korrekturwertspeicher enthält laufwerksindividuelle Korrekturwerte, der die vom Mikroprozessor 131 abgegebene Soll-Information über eine selektierte Spurnummer in korrigierte, d. h. dem individuellen Laufwerk entsprechende Werte für die selektierte Sollposition abgibt.

An die Ausgänge des Zählers 133 bzw. des Korrekturwertspeichers 134 ist ein Komparator 135 angeschlossen, der aus der Differenz zwischen der Soll- und der momentanen Ist-Position den Abstand des Magnetkopfes 2 von der selektierten Spur sowohl hinsichtlich des Betrages als auch der Richtung ermittelt.

Mit seinen Ausgangssignalen steuert der Komparator 135 einen Impulsgeber 136 an. Dieser Impulsgeber 136 gibt daraufhin solange Impulse an eine dem Antriebsmotor 10 zugeordnete Motorsteuerung 14 ab, bis die selektierte Soll-Position mit der momentanen Ist-Position übereinstimmt. Zugleich wird der Zählerstand des Vorwärts/Rückwärts-Zählers 133 durch die Ausgangssignale des Impulsgebers 136 ständig aktualisiert.

Im vorliegenden Fall wird nun davon ausgegangen, daß die Entwicklung auch bei Magnetband-Kassettengeräten darauf gerichtet ist, durch Erhöhung der Spurdichte auf dem Speichermedium, hier Magnetband 1 die Speicherkapazität zu erweitern. Dies ist unter anderem nur mit verbesserten Magnetköpfen, die auch physikalisch eng toleriert sind und mit verbesserten Positioniereinrichtungen erreichbar. Damit steigt der Aufwand für die Herstellung von Magnetköpfen und den Einrichtungen, die diese gegenüber dem Magnetband 1 positionieren. Der Wettbewerb auf dem Markt aber zwingt den Hersteller dazu, die Herstellkosten für seine Produkte zu optimieren, d. h. erhöhte Speicherkapazität bei mindestens gleichbleibender Produktqualität kann nicht über erhöhte Herstellungskosten erzielt werden. Mit verbesserten Herstellungsmethoden läßt sich sicherlich die Toleranzbreite der gefertigten Produkte, d. h. der Magnetköpfe, aber auch der gesamten Positioniereinrichtung erniedrigen, jedoch nicht in dem Maße, indem es erforderlich wäre. Relativ hohe Toleranzen in der Struktur von Magnetköpfen selbst sowie der Positioniereinrichtungen sind damit vorgegeben und müssen dennoch beherrscht werden.

Ein Ausweg aus dieser Diskrepanz ist es, derartige individuelle Abweichungen von einer vorbestimmten Norm als gegeben vorauszusetzen, sie aber geräteindividuell in ihren Auswirkungen auf den Positioniervorgang genau zu ermitteln. Der Steuerung des Laufwerkes für ein Magnetband-Kassettengerät wird die geräteindividuelle Ablage des Magnetkopfes 2 von einer Nominalposition mitgeteilt, so daß die Steuerung für die Positioniereinrichtung den geräteindividuellen Fehler selbst bei jedem Positioniervorgang ausgleichen kann.

Dieses Konzept ist nicht beschränkt auf eine bestimmte Struktur des Magnetkopfes 2, auch nicht auf ein bestimmtes Aufzeichnungsverfahren und ebensowenig auf ein bestimmtes Konstruktionskonzept für die Positioniereinrichtung selbst. Vorausgesetzt werden muß allerdings, daß die Positioniereinrichtung für den Magnetkopf 2 in bezug auf die Breite des Magnetbandes eine hohe Auflösung besitzt, d. h. mit einer Vielzahl von Schritten kleiner Schrittweite über die Breite des Magnetbandes 1 bewegbar ist. Die Positioniereinrichtung muß dabei so ausgestaltet sein, daß ihre Steuerung, insbesondere also die Steuerelektronik 13 jederzeit "weiß", wo sich der Magnetkopf 2 nominal befinden sollte. Dies läßt sich entweder dadurch verwirklichen, daß ein Detektor für die momentane Ist-Position des Magnetkopfes 2 gegenüber dem Magnetband 1 vorgesehen ist oder daß die Positiniereinrichtung direkt gesteuert werden kann. Wie oben beschrieben, ist dies in vielen Fällen dadurch realisierbar, daß einem Schrittmotor, der den Antriebsmotor 10 für die Positioniereinrichtung bildet, Schrittimpulse zugeführt werden, die ihrerseits gezählt werden. Davon abgesehen, spielt die spezifische Ausgestaltung der Positioniereinrichtung lediglich eine untergeordnete Rolle.

Weiterhin benötigt man in jedem Fall eine Detektoreinrichtung, die in der Lage ist, gespeicherte Information auf dem Magnetband 1 zu lesen und auszuwerten. Ein Beispiel für eine derartige Leseelektronik wurde vorstehend anhand von Figur 1 beschrieben.

Schließlich benötigt man eine elektronische Steuerung, die in der Lage ist, eine bestimmte Information über eine Ist-Position des Magnetkopfes zu speichern und diese gespeicherte Information für eine präzise ausgeführte Steuerung bei Positioniervorgängen im normalen Betriebszustand wieder zu benutzen und dabei die geräteindividuellen Fehler auszugleichen. Die oben anhand von Figur 1 beschriebene Steuerelektronik 13 ermöglicht auch dieses.

Unter diesen genannten Voraussetzungen, die jedes Laufwerk eines Magnetband-Kassettengerätes erfüllen muß, kann man ein Referenzmagnetband einsetzen, auf dem vorbestimmte Spuren hochpräzise aufgezeichnet sind, um die geräteindividuelle Toleranzen des einzelnen Laufwerkes zu ermitteln, wie noch im einzelnen auszuführen sein wird.

Zunächst aber sei dargelegt, wie man ein derartiges Referenzmagnetband herstellt. Offensichtlich benötigt man dafür ein spezifisch ausgerüstetes Laufwerk. Dies betrifft zunächst den Magnetkopf 2 selbst. Der Magnetkopf 2 könnte ein für den jeweiligen Anwendungsfall vorgesehener Standardkopf sein, der dann allerdings für diesen Verwendungsfall im Hinblick auf geringe Toleranzen speziell ausgewählt sein müßte. Häufig dürfte es sich auch als günstig erweisen, einen dafür eigens hergestellten Magnetkopf einzusetzen. Dies ist zwar relativ aufwendig und auch kostspielig, dennoch lohnt sich ein solcher Aufwand bei einem einzelnen Magnetkopf, nicht aber bei den entsprechenden Standardköpfen in einer Großserie. Es wäre beispielsweise sogar denkbar, diesen Aufzeichnungskopf für das Referenzmagnetband, gegebenenfalls eine Mehrzahl von Referenzmagnetbändern mit einer anderen Technologie z. B. als Dünnfilm-Magnetkopf herzustellen. Die Dünnfilmtechnik wird durchaus beherrscht, ist jedoch gegenüber der Herstellungstechnik für Ferritköpfe aufwendig und damit kostspielig. Vorstehende Erläuterungen zeigen, daß dem Fachmann Möglichkeiten zur Verfügung stehen, einen Magnetkopf herzustellen, der sich für die Erstellung eines Referenzmagnetbandes durchaus eignet.

Ein derartiger Kopf muß nun sorgfältig auf einer Positioniereinrichtung, beispielsweise der anhand von Figur 1 beschriebenen Art, montiert werden. Unter Laborbedingungen ist auch dieses mit herkömmlichen Mitteln, wenn auch mit entsprechendem Aufwand, ohne weiteres möglich. Unter Laborbedingungen heißt hier auch, daß weiterhin entsprechende Parameter wie ggfs. Luftfeuchte und Umgebungstemperatur ermittelt und während der Kalibrierung des Laufwerkes eingehalten werden.

Für die Kalibrierung des Laufwerkes zur Herstellung eines Referenzmagnetbandes wird eine Anordnung gemäß Figur 4 verwendet. In Anbetracht der vorausgegangenen Beschreibung der Positioniereinrichtung anhand von Figur 1 ist hier in Figur 4 lediglich schematisch der auf dem Tragarm 3 montierte Magnetkopf 2 sowie die Positionierspindel 4 mit dem entsprechenden Antrieb 10 dargestellt. Bei der Kalibrierung des Laufwerkes muß kontinuierlich die absolute Position des Magnetkopfes 2 in Abhängigkeit von der durch den Antrieb 10,14 der Positioniereinrichtung jeweils vorgegebenen Nominalposition ermittelt werden.

Dazu ist eine Meßeinrichtung notwendig, mit der die absolute Lage des Magnetkopfes 2 feststellbar ist. In Figur 4 ist dies schematisch durch einen Positionsdetektor 15 angedeutet, der einen am Magnetkopf 2 angreifenden Meßfühler 151 sowie eine Anzeigeeinrichtung 152 aufweist, um die jeweilige Absolutposition des Magnetkopfes anzuzeigen. Dem Fachmann stehen für die Ausgestaltung derartiger Meßeinrichtungen zum Feststellen einer Absolutposition eine Vielzahl von Möglichkeiten zur Verfügung, die auf rein mechanische Weise, mit optischen oder induktiven Mitteln eine solche Messung ermöglichen, so daß es hier wohl keiner weiteren detaillierten Erläuterung bedarf.

Der Kalibrierung wird eine Referenzlage des Magnetkopfes 2 zugrundegelegt, die hier vorzugsweise eine Kante des in einer Kassette in das Laufwerk eingelegten Referenzmagnetbandes 1' ist. Möglichkeiten zum Erkennen einer Bandkante des Magnetbandes sind dem Fachmann beispielsweise aus US-A-4,476,503 bzw. auch aus US-A-4,639,796 im Detail bekannt.

In Figur 4 ist deshalb lediglich schematisch eine Lichtschranke 16 angedeutet. Ein Sender 161 dieser Lichtschranke 16 ist am Tragarm 3 festgelegt, während der zugehörige Empfänger 162 der Lichtschranke ortsfest angeordnet ist. Ein Ausgangssignal des Empfängers 162 wird einem Kantendetektor 17 zugeführt, der das Ausgangssignal der Lichtschranke 16 bewertet und damit feststellt, wann der Magnetkopf 2 die Bezugsposition einnimmt. Ausgehend von dieser Bezugsposition kann dann der Magnetkopf 2 über die Positioniereinrichtung in jede beliebige Relativposition bezüglich des Magnetbandes 1' bewegt werden, wobei die Lagegenauigkeit lediglich von der Schrittweite des Antriebes der Positioniereinrichtung sowie auch von der Meßgenauigkeit des gewählten Positionsdetektors 15 abhängt.

Aufgrund der Ergebnisse des Kalibriervorganges kann man in herkömmlicher Weise in jeder gewünschten Position Informationsspuren auf dem Referenzmagnetband 1' in der üblichen Weise aufzeichnen. Als Referenzmagnetband wird vorzugsweise ein qualitativ besonders ausgewähltes Bandmaterial verwendet. Unter Umständen ist es auch zweckmäßig, Referenzmagnetbänder in Verbindung mit speziell gefertigten und damit möglichst eng tolerierten Magnetbandkassetten zu verwenden. Allerdings erscheint dies nicht in jedem Fall unbedingt erforderlich, da man, wie oben ausgeführt, von einer Bandkante des Referenzmagnetbandes 1' ausgehen kann, die die Bezugsposition definiert.

Auf dem Referenzmagnetband 1 können vielfältige Spurmuster aufgezeichnet werden, um diese dann dazu zu verwenden, die einzelnen Laufwerke einer Fertigungsserie individuell zu kalibrieren. Im einfachsten Fall genügt dazu eine einzige Informationsspur, die in einer definierten Relativposition zur Bezugskante des Referenzmagnetbandes 1' mit der beschriebenen Anordnung dann vorzugsweise in Bandmitte aufgezeichnet wird.

Zweckmäßig kann man aber auch, wie in Figur 5 schematisch dargestellt, auf dem Referenzmagnetband 1' zwei Informationsspuren 103 bzw. 104 aufzeichnen, die vorzugsweise jeweils nahe einer der beiden Bandkanten anzuordnen sind, um einen möglichst großen Abstand dieser beiden Informationsspuren voneinander zu erreichen und damit die Genauigkeit des Kalibrierungsvorganges der individuellen Laufwerke zu erhöhen. Dabei wird davon ausgegangen, daß der Abstand zwischen den Spurmitten der beiden Referenzspuren 103 bzw. 104 durch den Aufzeichnungsvorgang möglichst exakt definiert ist. Weiterhin ist aus dem vorstehend beschriebenen Kalibrierungsvorgang für die Herstellung von Referenzbändern ebenso bereits bekannt, wieviele Schritte beispielsweise bei einer Schrittmotorsteuerung nominal erforderlich sind, um den Magnetkopf 2 von einer Position über der Spurmitte der einen Referenzspur z. B. 103 über der Spurmitte der anderen Referenzspur 104 zu positionieren.

Unter diesen Voraussetzungen läßt sich der Kalibrierungsvorgang individuell für die Serienlaufwerke durchführen. Ein beschriebenes Referenzmagnetband 1' wird in das zu testende Laufwerk eingesetzt und im Testlauf zunächst die Spurmitte der unteren Referenzspur mit Hilfe der vom Magnetkopf 2 abgegebenen Lesesignale RDS ermittelt. Dabei wird der Magnetkopf 2, wie in Figur 5 schematisch dargestellt, langsam -von einer Position unterhalb der Referenzspur 104 ausgehend- über diese Spur nach oben hinweggehend bewegt. Bei diesem Vorgang werden, wie anhand von Figur 1 beschrieben, die Spurränder in Abhängigkeit von der Zahl der dazu notwendigen Schritte der Positioniereinrichtung in der Steuerelektronik 13 festgestellt. Analoges gilt für die Auswertung der oberen Referenzspur 103, dabei soll insbesondere auch weiterhin vom Mikroprozessor 131 der Steuerelektronik 13 die tatsächliche Zahl der Schritte zwischen den beiden Spurmitten der Referenzspuren 103 und 104 festgestellt werden.

Dies sei an einem Beispiel erläutert, wobei angenommen wird, daß der Magnetkopf 2 in einer Lage unterhalb der unteren Referenzspur 104 steht. Wenn dann der Magnetkopf 2 quer zur Längsrichtung des Referenzmagnetbandes 1' nach oben bewegt wird, wird mit Hilfe des Amplitudendetektors 123 in einer bestimmten Position der untere Spurrand der Referenzspur 104 festgestellt. Diese Position sei hier als Null-Position definiert. Dann wird der Magnetkopf 2 weiter nach oben bewegt bis über den Amplitudendetektor 123 der obere Spurrand festgestellt wird, dies sei beispielsweise nach 52 Schritten der Fall. Die Steuerelektronik 13 leitet durch einfache Differenzbildung daraus ab, daß die Spurmitte der unteren Referenzspur 104 in Position 26 liegt.

Bei der weiteren Auslenkung des Magnetkopfes 2 in Richtung auf die obere Referenzspur 103 werden fortlaufend die einzelnen Schritte gezählt. Beispielsweise möge der Amplitudendetektor 123 den unteren Spurrand der oberen Referenzspur 103 bei einem Zählwert 620 erreichen. Der Magnetkopf 2 wird weiter in Richtung der oberen Bandkante des Referenzmagnetbandes 1' bewegt und stellt beispielsweise bei einem Positionswert 674 den oberen Spurrand der Referenzspur 123 fest. Analog läßt sich nun aus der Differenz der Positionswerte 674 bzw. 620 die Spurmitte der oberen Referenzspur 103 mit dem Positionswert 647 errechnen. Weiterhin kann die Steuerelektronik 13 bzw. deren Mikroprozessor 131 den Abstand zwischen den beiden Spurmitten der Referenzspuren 103 bzw. 104 aus der Differenz der Positionswerte für die Spurmitten der Referenzspuren errechnen. Im angenommenen Beispiel beträgt diese Distanz 621 Positionsschritte.

Nun sei angenommen, daß die nominale erwartete Anzahl von Positionierschritten zwischen den beiden Spurmitten nach der Spezifikation für das getestete Laufwerk 600 sei. Dann kann man aus dem Verhältnis der tatsächlich festgestellten Schrittzahl 621 zu der spezifizierten Schrittzahl 600 einen Korrekturfaktor k ermitteln, der in diesem erwähnten Beispiel den Wert 1,035 besitzt. Dies ist damit ein geräteindividueller Korrekturwert, der in der Steuerelektronik 13 dieses getesteten Laufwerkes gespeichert wird und im normalen Betrieb immer zur Korrektur aller Positioniervorgänge benutzt wird. Es versteht sich wohl von selbst, daß der beispielhaft gegebene Wert für den Korrekturfaktor k nicht notwendigerweise immer > 1 sein muß. Sehr oft zeigen Positioniereinrichtungen eine gewisse Hysterese, deshalb kann es sinnvoll sein, auch Korrekturwerte aufgrund einer Bewegung des Magnetkopfes von oben nach unten festzustellen sowie ggfs. einen Mittelwert aus beiden richtungsabhängigen Korrekturfaktoren zu bilden.

Das anhand von Figur 5 gezeigte Spurmuster stellt lediglich eine von mehreren Möglichkeiten dar, so daß die Anwendung darauf nicht beschränkt ist. Wie bereits erwähnt, könnte auch nur eine einzige Spur für die Ermittlung des Korrekturfaktors k herangezogen werden, vorzugsweise wäre dies allerdings eine sehr breite Spur, wobei dann insbesondere die beiden Spurränder in entsprechender Weise festgestellt und ausgewertet werden. Sollte aus anderen Gründen auf dem Referenzmagnetband 1' eine Vielzahl von Referenzspuren aufgezeichnet sein, so könnte auch ein solches Spurmuster zur Ermittlung des Korrekturfaktors k herangezogen werden, sofern die Steuerelektronik 13 des entsprechenden Laufwerkes in die Lage versetzt ist festzustellen, welche der überlaufenen Referenzspuren für die exakte Ermittlung des Korrekturfaktors k herangezogen werden sollen.

Die vorstehende Beschreibung bezieht sich auf die Ermittlung eines individuellen Korrekturfaktors k, der Toleranzen der Positioniereinrichtung, also des Antriebs und insbesondere auch des Übersetzungsgetriebes erfaßt. Prinzipiell können auch weitere Korrekturfaktoren ermittelt und in der Steuerelektronik 13 des jeweils getesteten Laufwerkes fest gespeichert werden. In Figur 2 wurde als Beispiel für die Struktur eines Magnetkopfes 2 eine Ausführungsform mit zwei Magnetkopfsystemen gezeigt. Man kann nun in analoger Auswertung auch einen Korrekturfaktor für die tatsächliche Abweichung der Distanz zweier oder mehrerer solcher Magnetkopfsysteme voneinander ermitteln. In diesem Fall positioniert man die einzelnen Magnetkopfsysteme jeweils, wie vorstehend beschrieben, bezüglich der Spurmitte einer bestimmten Referenzspur, beispielsweise der unteren Referenzspur 103 nach Figur 5 und stellt auf diese Weise den tatsächlichen Abstand der einzelnen Magnetkopfsysteme untereinander fest. Ein solcher weiterer Korrekturfaktor, der sich aus dem Verhältnis des gemessenen Abstandes und des spezifizierten Abstandes ergibt, kann ebenso in der Steuerelektronik 13 gespeichert werden, um im normalen Betrieb dann immer herangezogen zu werden, wenn von der Benutzung eines Magnetkopfsystemes auf ein anderes übergegangen wird.

Weitere Messungen können bei der Kalibrierung des einzelnen Laufwerkes vorgenommen werden, um andere Informationen über Toleranzen der jeweiligen Magnetköpfe zu erhalten. Die Magnetkopfsysteme der in Figur 2 dargestellten Magnetkopfstruktur weisen beispielsweise zwei Lesespaltpaare mit einem dazwischen mittig angeordneten Schreibspaltpaar auf. Ist der Magnetkopf nicht ganz exakt justiert bzw. weist er Toleranzen in der Anordnung der spalte innerhalb eines Magnetkopfsystemes auf, so lassen sich die beschriebenen Messungen auch dazu verwenden, die tatsächlichen Spaltmitten zu ermitteln. Theoretisch sollten die beiden Mittenpositionen identisch sein, unabhängig davon welches Lesespaltpaares beim Lesen von Informationen benutzt wird. Wird jedoch eine Differenz festgestellt, ist dies der Nachweis für eine Spurmittenabweichung. Ein solcher Korrekturwert kann dann immer benutzt werden, wann immer vorher aufgezeichnete Daten mit dem entsprechenden Lesespaltpaar wiedergelesen werden.

Vorstehend wurde bereits mehrfach auf die Temperatur als eine der Einflußgrößen hingewiesen. Es ist zweckmäßig, die Erstellung des Referenzmagnetbandes 1' und die Kalibrierung der Laufwerke vorzugsweise bei der gleichen Temperatur vorzunehmen. Darüber hinaus könnte es aber bei größerem Temperaturgang des jeweiligen Laufwerkkopfes sinnvoll sein, individuelle Korrekturwerte k für einzelne Temperaturbereiche aufzunehmen. Dann aber wäre in den Laufwerken ein Temperatursensor vorzusehen, damit die Steuerung 13 die angepaßten Korrekturfaktoren selektieren kann. Analoges wäre gegebenenfalls auch für die Berücksichtigung der Luftfeuchtigkeit denkbar.

Das vorstehend beschriebene Ausführungsbeispiel, bei dem die auf Herstellungstoleranzen zurückzuführenden Positionierfehler eines Laufwerkes eines Magnetbandes-Kassettengerätes reduziert und möglichst ausgeglichen werden, stellt nur ein Beispiel für eine mögliche Anwendung dar. Die Erfindung ist jedoch auf dieses Beispiel keineswegs beschränkt. Grundsätzlich wäre es auch denkbar, dieses Korrekturverfahren nicht nur allgemein bei Magnetbandgeräten auch für Audio- und Videoaufzeichnung, sondern auch in entsprechender Anpassung zur geräteindividuellen Kalibrierung von Laufwerken für Floppy-Disk-Speicher und sogar Festplattenspeicher einzusetzen. Das beschriebene Ausführungsbeispiel verdeutlicht auch, daß die Anwendung dieses erfindungsgemäßen Verfahrens keineswegs auf bestimmte Typen von Positioniereinrichtungen beschränkt ist. Beispielsweise wäre es auch denkbar, statt des beschriebenen Schrittmechanismus andere bekannte Positioniereinrichtungen, wie Linearpositionierer mit einer stromgesteuerten Tauchspulanordnung und sogar Drehpositionierer mit Schwingspulantrieb einzusetzen.

Weiterhin wurde verdeutlicht, daß sich die Anwendung der Erfindung auch nicht auf bestimmte Magnetkopfstrukturen beschränkt, sondern auch hier dieses Verfahren zum Ermitteln und Ausgleichen von Herstellungstoleranzen in flexibler Weise an den jeweils vorliegenden Anwendungsfall anpaßbar ist. Wesentlich ist in allen diesen Anwendungsfällen lediglich, daß ein Spurmuster auf dem als Referenz dienendes Speichermedium, sei es Magnetband oder Magnetplatte mit einem möglichst exakt kalibrierten Laufwerk genau definiert hergestellt wird, so daß dann dieser Referenzträger als Eichnormal für die geräteindividuelle Kalibrierung verwendet werden kann. Weiterhin wird vorausgesetzt, daß die jeweile Laufwerkssteuerung Mittel aufweist, die in der Lage sind, die auf dem Eichnormal aufgezeichnete Information zu lesen, zu bewerten und somit die geräteindividuellen Abweichungen festzustellen. Schließlich müssen die auf diese Weise festgestellten Korrekturwerte in der Laufwerkssteuerung nichtflüchtig speicherbar sein, damit diese Korrekturwerte im laufenden Betrieb jederzeit zur Verfügung stehen, solange die Positioniereinrichtung des Laufwerkes, gegebenenfalls auch nur der Magnetkopf nicht ausgewechselt werden. Nach derartigen Wartungsarbeiten wäre dann allerdings eine erneute Kalibrierung des individuellen Laufwerkes erforderlich.

## Patentansprüche

1. Verfahren zum Positionieren eines Schreib/Lesekopfes mit einem ersten Magnetkopfsystem (201-203) und einem zweiten Magnetkopfsystem (204-206), in bezug auf ein Speichermedium eines Magnetschichtspeichers einer dem Schreib/Lesekopf zugeordneten Positioniereinrichtung, mit den Schritten :
- Bereitstellen eines magnetischen Referenzspeichermediums (1') mit einem präzise definierten und positionierten Referenzspurmuster;
- Bestimmen einer Anzahl nominaler Schritte, die für eine nominale Positioniereinrichtung erforderlich sind, einen nominalen Schreib/Lesekopf an einem ersten Spurmuster-Referenzpunkt zu einem zweiten Spurmuster-Referenzpunkt auf dem Referenzspurmuster zu bewegen;
- Einrichten des Referenzspeichermediums (1') in bezug auf den Schreib/Lesekopf;
- Bewegen des ersten Magnetkopfsystems von dem ersten Spurmuster-Referenzpunkt zu dem zweiten Spurmuster-Referenspunkt und Zählen der Anzahl tatsächlich erforderlicher Schritte als erste Zählung;
- Vergleichen der Anzahl tatsächlicher Schritte mit der Anzahl nominaler Schritte und Erzeugen eines Korrekturfaktors (k) aufgrund des Vergleichs;
- Speichern des Korrekturfaktors (k) ; und
- Bewegen des zweiten Magnetkopfsystems des Schreib/Lesekopfes von dem ersten Spurmuster-Referenzpunkt zu dem zweiten Spurmuster-Referenzpunkt und Zählen der Anzahl tatsächlich erforderlicher Schritte als eine zweite Zählung;
- Vergleichen der ersten tatsächlichen Schrittzählung mit der zweiten tatsächlichen Schrittzählung und Erzeugen eines weiteren Korrekturfaktors auf der Basis des Vergleichs, wobei der Korrekturfaktor eine Abweichung vom Nominalwert des Abstandes zwischen dem ersten und zweiten Magnetkopfsystem auf dem ausgewählten Kopf angibt;
- Speichern des weiteren Korrekturfaktors; und
- Verwenden sowohl des Korrekturfaktors als auch des weiteren Korrekturfaktors beim Positionieren der Magnetkopfsysteme mittels der zugeordneten Positioniereinrichtung auf Spuren des Speichermediums.

2. Verfahren nach Anspruch 1, dadurch gekennzeichnet, daß als magnetisches Referenzspeichermedium (1') eines mit genau definierten und positionierten ersten und zweiten beabstandeten Referenzspuren (103, 104) eingesetzt wird und die Anzahl nominaler Schritte sowie die Anzahl tatsächlicher Schritte von der Mittenlinie der ersten Referenzspur (103) zu einer Mittenlinie der zweiten Referenzspur (104) für die Bestimmung des Koorekturfaktors (k) verwendet wird.

3. Verfahren nach Anspruch 2, dadurch gekennzeichnet, daß die Mittenlinien der ersten und zweiten Referenzspur (103, 104) festgelegt werden, indem zunächst obere und untere Spurkanten dieser Spuren bestimmt und diese Kanten zum Auffinden der Mittellinien verwendet werden.

4. Verfahren nach Anspruch 1, dadurch gekennzeichnet, daß als magnetisches Referenzspeichermedium eines mit einer präzise definierten und positionierten Referenzspur eingesetzt wird und die Anzahl nominaler Schritte sowie die Anzahl tatsächlicher Schritte von einer unteren Kante der Referenzspur zu einer oberen Kante der Referenzspur zur Bestimmung des Korrekturfaktors (k) verwendet wird.

## Claims

1. A method of positioning a read-write head comprising a first magnetic head system (201 - 203) and a second magnetic head system (204 - 206) relatively to a storage medium of a magnetic film memory belonging to a positioning device associated with the read-write head, the method comprising the following steps:
providing a magnetic reference storage medium (1') with a precisely defined and positioned reference track pattern;
defining a number of nominal steps required by a nominal positioning device in order to move a nominal read-write head at a first reference point on the track pattern to a second reference point on the track pattern;
aligning the reference medium (1') relatively to the read-write head;
moving the first magnetic head system from the first reference point on the track pattern to the second reference point on the track pattern and counting the number of actually required steps (= first count);
comparing the number of actual steps with the number of nominal steps and generating a corrective factor (k) on the basis of the comparison;
storing the corrective factor (k); and
moving the second magnetic head system of the read-write head from the first reference point to the second reference point on the track pattern and counting the number of actually required steps (= second count);
comparing the first count of actual steps with the second count of actual steps and generating another corrective factor on the basis of the comparison, the corrective factor showing the deviation from the nominal value of the distance between the first and second magnetic head system on the selected head;
storing the additional corrective factor and
using both the corrective factor and the additional corrective factor when positioning the magnetic head systems on tracks of the storage medium, using the associated positioning device.

2. A method according to claim 1, characterised in that the magnetic reference storage medium (1') has an exactly defined and positioned first and second spaced-apart reference track (103, 104) and the number of nominal steps and the number of actual steps from the centre line of the first reference track (103) to a centre line of the second reference track (104) is used for determining the corrective factor (k).

3. A method according to claim 2, characterised in that the centre lines of the first and second reference track (103, 104) are determined by first determining upper and lower edges of these tracks and using these edges for finding the centre lines.

4. A method according to claim 1, characterised in that the magnetic reference storage medium has a precise defined and positioned reference track and the number of nominal steps and the number of actual steps from a lower edge of the reference track to an upper edge of the reference track is used to determine the corrective factor (k).

## Revendications

1. Procédé de positionnement d'une tête de lecture-écriture comprenant un premier système de têtes magnétiques (201-203) et un deuxième système de têtes magnétiques (204-206) par rapport à un support d'information d'une mémoire à couche magnétique d'un dispositif de positionnement associé à la tête de lecture-écriture, comprenant les étapes suivantes :
- mise à disposition d'un support magnétique d'informations, de référence (1') ayant une configuration de pistes de référence définie et positionnée avec précision,
- détermination d'un certain nombre de pas nominaux qui sont nécessaires pour un dispositif nominal de positionnement pour déplacer une tête nominale de lecture-écriture située à un premier point de référence de la configuration de pistes jusqu'à un deuxième point de référence de la configuration de pistes situé sur la configuration de pistes de référence,
- réglage du support d'informations de référence (1') par rapport à la tête de lecture-écriture,
- déplacement du premier système de têtes magnétiques du premier point de référence de configuration de pistes au deuxième point de référence de configuration de pistes et comptage comme premier compte du nombre de pas effectivement nécessaires,
- comparaison du nombre de pas effectifs au nombre de pas nominaux et production d'un facteur de correction (k) sur la base de cette comparaison,
- mémorisation du facteur de correction (k), et
- déplacement du deuxième système de têtes magnétiques de la tête de lecture-écriture du premier point de référence de configuration de pistes au deuxième point de référence de configuration de pistes et comptage comme deuxième compte du nombre de pas effectivement nécessaires,
- comparaison du premier compte effectif de pas au deuxième compte effectif de pas et production d'un autre facteur de correction sur la base de cette comparaison, ce facteur de correction indiquant un écart de la valeur nominale de la distance entre les premier et deuxième systèmes de têtes magnétiques sur la tête choisie,
- mémorisation de cet autre facteur de correction, et
- utilisation des deux facteurs de correction lors du positionnement des systèmes de têtes magnétiques sur des pistes du support d'informations au moyen du dispositif de positionnement associé.

2. Procédé selon la revendication 1, caractérisé par le fait que comme support magnétique d'informations de référence (1') est employé un support ayant des première et deuxième pistes de référence espacées (103, 104) définies et positionnées avec précision et le nombre de pas nominaux ainsi que le nombre de pas effectifs de la ligne centrale de la première piste de référence (103) à une ligne centrale de la deuxième piste de référence (104) est utilisé pour la détermination du facteur de correction (k).

3. Procédé selon la revendication 2, caractérisé par le fait qu'on fixe les lignes centrales de la première et de la deuxième piste de référence (103, 104) en déterminant les bords supérieur et inférieur de ces pistes, puis en utilisant ces bords pour trouver les lignes centrales.

4. Procédé selon la revendication 1, caractérisé par le fait que comme support magnétique d'informations de référence est employé un support ayant une piste de référence définie et positionnée avec précision et le nombre de pas nominaux ainsi que le nombre de pas effectifs d'un bord inférieur à un bord supérieur de cette piste de référence est utilisé pour la détermination du facteur de correction (k).
